## Europäisches Patentamt
## European Patent Office
## Office européen des brevets

(19)

(11) Veröffentlichungsnummer: **0 156 097**
**B1**

(12) **EUROPÄISCHE PATENTSCHRIFT**

(45) Veröffentlichungstag der Patentschrift:
03.08.88

(51) Int. Cl.⁴: **G 02 B 6/44**

(21) Anmeldenummer: **84890058.5**

(22) Anmeldetag: **27.03.84**

(54) **Kabel.**

(43) Veröffentlichungstag der Anmeldung:
**02.10.85 Patentblatt 85/40**

(45) Bekanntmachung des Hinweises auf die Patenterteilung:
**03.08.88 Patentblatt 88/31**

(84) Benannte Vertragsstaaten:
**AT BE CH DE FR GB IT LI LU NL SE**

(56) Entgegenhaltungen:
**EP - A - 0 022 036**
**DE - A - 2 818 297**
**DE - A - 3 120 058**
**DE - A - 3 214 732**
**DE - B - 2 628 069**
**DE - B - 2 628 070**
**DE - U - 8 016 766**
**GB - A - 2 088 584**
**GB - A - 2 107 896**
**US - A - 4 185 809**
**US - A - 4 213 672**

**LRC Handbook of Chemistry and Physics, 59th Edition, 1978-79, p. F.21**

(73) Patentinhaber: **KABEL- und DRAHTWERKE Aktiengesellschaft, Oswaldgasse 33, A-1121 Wien (AT)**

(72) Erfinder: **Faltin, Leopold, Dipl.-Ing., Dr., Wilhelminenstrasse 147/1, A-1160 Wien (AT)**
Erfinder: **Zöckl, Peter, Lederergasse 1/II, A-2700 Wr. Neustadt (AT)**

(74) Vertreter: **Krause, Peter, Penzinger Strasse 76, A-1141 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein optisches Kabel, das eine in einem zentral angeordneten Kunststoffrohr lose liegende Seele mit Lichtwellenleitern enthält, deren Oberfläche in bezug auf die Innenfläche des Kunststoffrohres einen kleinen coulombschen Reibungskoeffizienten aufweist. Dieses Kabel enthält entweder ausschliesslich oder neben anderen Übertragungselementen eine Seele mit Lichtwellenleitern.

Der Begriff Seele umfasst im hier verwendeten Sinn alle durch Verseilung, Umflechtung und/oder gemeinsame Ummantelung zu einem kompakten Verband zusammengefassten Elemente, wie Lichtwellenleiter, Zug-, Stütz- oder Füllelemente, sowie Bewicklungen.

Lichtwellenleiter-Kabel und Verbundkonstruktionen, die sowohl Lichtwellenleiter als auch konventionelle Nachrichten- und/oder Energieübertragungselemente enthalten, sind bekannt (Übersicht in Optical Fibre Communication, Mc Graw-Hill 1981, S. 520–530).

Bekannt sind auch Kabelkanäle, in die ein oder mehrere kleinere Kabel in an sich bekannter Weise eingezogen werden können (DE-AS 3 206 252). Je nach verwendetem Schmiermittel lassen sich erfahrungsgemäss Kabellängen von einigen hundert Metern einziehen. Infolge der unvermeidlichen Schmiermittelalterung ist das spätere Entfernen der Kabel zum Teil mit Problemen verbunden.

Ferner sind Kabelkonstruktionen bekannt, insbesondere für selbsttragende Luftkabel, bei denen durch besonders lockeren Aufbau eine stark dehnbare Seele und durch Bewicklung der Seele mit Kunststoffbändern eine, wenn auch nicht näher spezifizierte Gleitfähigkeit der Seele im Mantel erzielt wird (DE-U 8 016 766). Durch die Gleitfähigkeit soll eine lokale Dehnung des Kabels von der Seele ferngehalten werden. Da das aber mit bekannten Mitteln nur über Längen von einigen Metern gelingt, muss die Seele selbst nach wie vor hoch dehnbar sein. Im Laufe der Zeit wird bei schrägen Spannfeldern die Seele dieses Kabels deshalb zur tiefergelegenen Seite hinrutschen und am höhergelegenen Ende entsprechend stark vorgedehnt.

Es sind auch Kabelkonstruktionen bekannt, bei denen Lichtwellenleiter-Kabel zu ihrem Schutz gegen Querkräfte lose im Inneren einer Röhre angeordnet werden, die ihrerseits Aufbauelement eines zusammengesetzten Kabels mit weiteren Übertragungselementen ist (DE-A 3 236 972). Eine Längsbewegung der Lichtwellenleiter-Kabel in der Röhre ist nicht vorgesehen.

Weiterhin ist aus der US-A 4 213 672 eine optische Faser mit einer Ummantelung und einer Gleitschicht bekannt, die lose in einem Kunstsoffrohr angeordnet ist. Die Gleitschicht weist einen sehr kleinen Reibungskoeffizienten auf. Ebenso ist aus der GB-A-2 088 584 eine Faser bekannt, die einen Mantel aus Nylon lose im Kunststoffrohr aufweist. Dass Nylon gute Reibungsverhältnisse aufweist, ist aus LRC Handbook of Chemistry and Physics-59th Edition, 1978–79 page F 21 bekannt.

Schliesslich ist noch aus der DE-B 2 628 070 ein optisches Kabel bekannt, das mehrere optische Adern aufweist. Die einzelnen Adern bestehen aus einer Glasfaser mit einem Mantel und sind lose in einer doppelschichtigen Hülle angeordnet. Dadurch dass die innere Schicht der Hülle aus einem fluorierten Polymer besteht, sind günstige Reibungsverhältnisse zwischen der Ader und der Kunststoffhülle gewährleistet.

Der Erfindung liegt die Aufgabe zugrunde, eine Lichtwellenleiter-Kabelseele nicht nur gegen alle bei der Verlegung und nachher auftretenden mechanischen Beanspruchungen optimal zu schützen, sondern auch alterungsunbhängig eine so grosse Längsbeweglichkeit dieser Seele zu erreichen, dass sie selbst nach Verlegung ein- bzw. herausziehbar ist und deshalb auch lokalen Dehnungen des Kabels über grosse Strecken ausweichen kann.

Das erfindungsgemässe Kabel ist dadurch gekennzeichnet, dass die Oberfläche der Seele von einem zugfesten Geflecht derart gebildet ist, dass es in bezug auf die Innenfläche des Kunststoffrohres einen Reibungskoeffizienten von < 0,15 aufweist. Mangels Verwendung von Schmiermitteln entfallen somit Alterungsprobleme. Infolge des geringen Gewichtes von Seelen mit Lichtwellenleitern könnten bei den angegebenen kleinen Reibungen über völlig gerade Strecken Längen von mehreren Kilometern in einem Stück mit Kräften unter 100 daN eingezogen werden. Durch das zugfeste Geflecht wird die Berührungsfläche zwischen Rohr und Seele in eine Vielzahl kleiner Berührungsflächen soweit aufgespalten, dass keine Adhäsionskräfte mehr wirksam werden können. Ein Geflecht nimmt überdies die eingeleiteten Reibungskräfte schnellmöglichst auf und schützt deshalb bei geeigneter, nach bekannten Gesichtspunkten vorgenommener Dimensionierung die darunter gelegene Seele optimal vor Überdehnung.

Unter Berücksichtigung der praktisch unvermeidlichen Richtungswechsel sind etwa auf einer Luftkabelstrecke entlang einer Hochspannungsfreileitung immer noch Einziehlängen von 1–2 km erreichbar.

Erfindungsgemäss besteht das Kunststoffrohr aus einem thermoplastischen Kunststoff. Dieses Kunststoffrohr wird unter Verwendung der in der Kabelindustrie üblichen Extrusionseinrichtungen, beispielsweise aus Polyäthylen hergestellt. Die Erfahrung hat gezeigt, dass sich härtere Polyäthylensorten hoher Dichte für diesen Zweck besonders gut eignen.

Einen besonderen Erfindungsvorschlag zufolge enthält das zugfeste Geflecht Aramid-, Kohlenstoff- oder Polyesterfaserstränge. Diese Materialien kombinieren in optimaler Weise geringe Reibung, hohe Abrieb- und Zugfestigkeit und niedriges Gewicht.

Gemäss einer weiteren Ausgestaltung der Erfindung verlaufen die im Geflecht jeweils zuoberst liegenden Fasern im wesentlichen längsgerichtet. Dies wird durch an sich bekannte Massnahmen, wie grosse Schlaglänge, Rückdrehung, oder Vororiendierung entgegen der Schlagrichtung erreicht. Dadurch werden Reibung und Abrieb stark reduziert. Ein so ausgeführtes Geflecht aus Aramidfastersträngen ergibt in einem Polyäthylenrohr hoher Dichte Reibungskoeffizienten unter 0,1.

Erfindungsgemäss ist das Kunststoffrohr mit einem gewickelten oder längslaufenden Metall-Kunststoff-Verbundband überlappend bedeckt (Wasserdampfsperre).

In Ausgestaltung der Erfindung sind auf das Kunststoffrohr nach an sich bekannten Verfahren ein oder mehrere Mäntel aus Metall und/oder thermoplastischen Kunststoffen aufgebracht.

Eine weitere erfindungsgemässe Ausgestaltung besteht darin, dass das Kunststoffrohr in an sich bekannter Weise mit einer ein- oder mehrlagigen Armierung verstärkt ist. Eine dafür typische Ausführung wäre beispielsweise eine gemischte Bewehrung aus Aldrey- und Alumoweld-Runddrähten für den Einsatz als Erdseil-Luftkabel.

Weiters kann das Kunststoffrohr erfindungsgemäss auch den Kern (Zentralelement) eines in an sich bekannter Weise aufgebauten Nachrichten- oder Energiekabels bilden.

Einem weiteren Erfindungsvorschlag zufolge ist die lose Seele durch eine starre Verbindung mit den darüberliegenden Aufbauelementen des Kabels an den Enden am Hineinrutschen in das Kunststoffrohr bei Zugbelastung des Kabels gehindert. Diese starre Verankerung hat zwei Vorteile: Erstens genügt es, sie erst nach der Verlegung des Kabels vorzunehmen, wenn dieses bereits entsprechend der Verlegespannung gedehnt ist und seine Anfangsreckung (Setzen der Armierung bei Luftkabeln) erfahren hat; nur zusätzliche Dehnungen werden dann an der Seele wirksam. Zweitens werden in Längsrichtung veränderliche Dehnungen des Kabels (etwa durch unterschiedliche Eis- oder Windlasten oder bei der Verlegung) immer in eine einheitliche, dem Mittelwert der Kabeldehnung entsprechende Dehnung der Seele umgewandelt; dadurch sind lokal enorme Überlastungen des Kabels zulässig, ohne dass dabei die Seele im geringsten gefährdet würde.

Schliesslich ist gemäss einem weiteren Erfindungsvorschlag die lose Seele an einem Ende mit den darüberliegenden Aufbauelementen des Kabels starr verbunden, vom anderen Ende her aber mit einer im wesentlichen konstanten Kraft vorgespannt, so dass die bei Zugbelastung des Kabels in das Kunststoffrohr hineingerutschte Seele nach Wegfall dieser Zugbelastung wieder in die ursprüngliche Lage zurückgleitet. Der Vorteil dieser einseitig starren Verankerung ist, dass die Seele eine vom Belastungszustand des Kabels im wesentlichen unabhängige Dehnung erfährt (Federzug etc.).

Sowohl einseitig als auch beidseitig starre Verankerungen haben vor allem für Luftkabelanwendungen Bedeutung.

Die Vorteile der beschriebenen Erfindung sind wie folgt zusammenzufassen:

Das bewährte Rohrkabelprinzip lässt sich nun auch auf Luft- bzw. Seekabel anwenden.

Gegenüber dem Stand der Technik sind wesentlich grössere Längen einziehbar.

Probleme durch Schmiermittelalterung entfallen.

Ein Kabel mit beweglicher Seele wird wie ein herkömmliches Kabel verlegt, die Seele braucht nicht nachträglich eingezogen zu werden.

Stationäre Dehnungen des Kabels (durch stationäre Zugspannungen und Seilreckung) können erstmals von der Seele ferngehalten werden.

Die höchstzulässige Dehnung der Kabelseele begrenzt nicht, wie bei bekannten Kabelkonstruktionen, den Dehnungshöchstwert des Kabels, sondern nur dessen mittlere Dehnung.

## Patentansprüche

1. Optisches Kabel, das eine in einem zentral angeordneten Kunststoffrohr lose liegende Seele mit Lichtwellenleitern enthält, deren Oberfläche in bezug auf die Innenfläche des Kunststoffrohres einen kleinen coulombschen Reibungskoeffizienten aufweist, dadurch gekennzeichnet, dass die Oberfläche der Seele von einem zugfesten Geflecht derart gebildet ist, dass es in bezug auf die Innenfläche des Kunststoffrohres einen Reibungskoeffizienten von < 0,15 aufweist.

2. Kabel nach Anspruch 1, dadurch gekennzeichnet, dass das Kunststoffrohr aus einem thermoplastischen Kunststoff besteht.

3. Kabel nach Anspruch 1 oder 2, dadurch gekennzeichnet, dass das zugfeste Geflecht Aramid-Kohlenstoff- oder Polyesterfasterstränge enthält.

4. Kabel nach Anspruch 3, dadurch gekennzeichnet, dass die im Geflecht jeweils zuoberst liegenden Fasern im wesentlichen längsgerichtet verlaufen.

5. Kabel nach mindestens einem der vorhergehenden Ansprüche, dadurch gekennzeichnet, dass das Kunststoffrohr mit einem längslaufenden oder gewickelten Metall-Kunststoff-Verbundband überlappend bedeckt ist.

6. Kabel nach mindestens einem der vorhergehenden Ansprüche, dadurch gekennzeichnet, dass auf das Kunststoffrohr nach an sich bekannten Verfahren ein oder mehrere Mäntel aus Metall und/oder thermoplastischen Kunststoffen aufgebracht sind.

7. Kabel nach mindestens einem der vorhergehenden Ansprüche, dadurch gekennzeichnet, dass das Kunststoffrohr in an sich bekannter Weise mit einer ein- oder mehrlagigen Armierung verstärkt ist.

8. Kabel nach mindestens einem der Ansprüche 1–6, dadurch gekennzeichnet, dass das Kunststoffrohr den Kern eines in an sich bekannter Weise aufgebauten Nachrichten- oder Energiekabels bildet.

9. Kabel nach mindestens einem der vorhergehenden Ansprüche, dadurch gekennzeichnet, dass die lose Seele durch eine starre Verbindung mit den darüberliegenden Aufbauelementen des Kabels an den Enden am Hineinrutschen in das Kunststoffrohr bei Zubelastung des Kabels gehindert ist.

10. Kabel nach mindestens einem der Ansprüche 1–8, dadurch gekennzeichnet, dass die lose Seele an einem Ende mit den darüberliegenden Aufbauelementen des Kabels starr verbunden, vom anderen Ende her aber mit einer im wesentlichen konstanten Kraft vorgespannt ist, so dass die bei Zugbelastung des Kabels in das Kunststoffrohr hineingerutschte Seele nach Wegfall dieser Zugbelastung wieder in die ursprüngliche Lage zurückgleitet.

## Claims

1. Optical cable comprising a core with light wave conductors disposed loosely in a centrally arranged plastic tube, whose surface has a small coulomb friction coefficient with respect to the inner surface of the plastic tube, characterized in that the surface of the core is formed from a tension-proof mesh such that it has a friction coefficient of <0.15 with respect to the inner surface of the plastic tube.

2. Cable as claimed in claim 1, characterized in that the plastic tube consists of a thermoplastic material.

3. Cable as claimed in claim 1 or 2, characterized in that the tension-proof mesh contains aramid, carbon or polyester fibre bundles.

4. Cable as claimed in claim 3, characterized in that the fibres lying uppermost in the mesh extend substantially in a longitudinal direction.

5. Cable as claimed in at least one of the preceding claims, characterized in that the plastic tube is covered in an overlapping manner with a longitudinally extending or wound composite metal and plastic tape.

6. Cable as claimed in at least one of the preceding claims, characterized in that one or more jackets of metal and/or thermoplastics are applied to the plastic tube by known methods.

7. Cable as claimed in at least one of the preceding claims, characterized in that the plastic tube is strengthened in a known manner with a single or multilayer reinforcement.

8. Cable as claimed in at least one of claims 1 to 6, characterized in that the plastic tube forms the core of a communication or power cable constructed in a known manner.

9. Cable as claimed in at least one of the preceding claims, characterized in that the loose core is prevented from slipping at its ends into the plastic tube during loading of the cable by a rigid connection with the structural components of the cable disposed thereabove.

10. Cable as claimed in at least one of claims 1 to 8, characterized in that the loose core is rigidly connected at one end with the structural components of the cable disposed there above and is pretensioned at the other end with a substantially constant force so that the core which has slipped during loading of the cable into the plastic tube slides back into the original position when this load ceases.

## Revendications

1. Câble optique qui comprend une âme possédant des conducteurs d'ondes lumineuse placés avec montage lâche dans un tube de matière plastique disposé en position centrale, âme dont la surface présente un petit coefficient de frottement coulombien par rapport à la surface interne du tube de matière plastique, caractérisé en ce que la surface de l'âme est formée d'un entrelacement résistant à la traction de telle manière qu'elle présente un coefficient de frottement inférieur à 0,15 relativement à la surface interne du tube de matière plastique.

2. Câble selon la revendication 1, caractérisé en ce que le tube de matière plastique est fait d'une matière thermoplastique.

3. Câble selon la revendication 1 ou 2, caractérisé en ce que l'entrelacement réstistant à la traction contient des faisceaux de fibres d'aramide, de carbone ou de polyester.

4. Câble selon la revendication 3, caractérisé en ce que les fibres situées en position extrême supérieure dans l'entrelacement s'étendent sensiblement dans la direction longitudinale.

5. Câble selon au moins une des revendications précédentes, caractérisé en ce que le tube de matière plastique est recouvert d'un ruban composite métalloplastique disposé longitudinalement ou enroulé.

6. Câble selon au moins une des revendications précédentes, caractérisé en ce qu'une ou plusieurs enveloppes faites de métal et/ou de matière synthétique thermoplastique sont disposées sur le tube de matière plastique, selon des procédés connus en soi.

7. Câble selon au moins une des revendications précédentes, caractérisé en ce que le tube de matière plastique est renforcé d'une façon connue en soi d'une armure monocouche ou multicouche.

8. Câble selon au moins une des revendications 1 à 6, caractérisé en ce que le tube de matière plastique forme le noyau d'un câble de transmission d'informations et d'énergie d'une construction connue en soi.

9. Câble selon au moins une des revendications précédentes, caractérisé en ce que l'âme à montage lâche est empêchée de rentrer dans le tube de matière plastique, aux extrémités, en présence d'une sollicitation de traction du câble par une liaison rigide qui la réunit aux éléments constitutifs du câble qui la surmontent.

10. Câble selon au moins une des revendications 1 à 8, caractérisé en ce que l'âme à montage lâche est reliée rigidement à une extrémité aux éléments constitutifs du câble qui la surmontent, tandis qu'elle est précontrainte par une force sensiblement constante à partir de l'autre extrémité, de sorte que l'âme qui est rentrée dans le tube en matière plastique par suite d'une sollicitation du câble à la traction revient en coulissant à la position initiale après la disparition de cette sollicitation de traction.